# EUROPEAN PATENT APPLICATION

(11) **EP 2 815 958 A1**
(43) Date of publication of application: **24.12.2014**
(21) Application number: 13172430.4
(22) Date of filing: 18.06.2013
(51) Int. Cl.: B64C 1/00, B64C 3/00

(54) **Structural member and associated method**

(71) Applicant: Airbus Operations GmbH, 21129 Hamburg (DE)
(72) Inventor: Benthien, Hermann, 27367 Sottrum (DE); Hegenbart, Matthias, 21702 Ahlerstedt (DE); Michailidis, Ioannis, 20255 Hamburg (DE); Renner, Mathias, 27777 Ganderkesee (DE)
(74) Representative: Peckmann, Ralf

(57) **Abstract**

The present invention relates to a structural member (M) for an aircraft or spacecraft, comprising a first part (1) comprised of a first material having a first coefficient of thermal expansion (α1); and a second part (2) comprised of a second material having a second coefficient of thermal expansion (α2); wherein the first part (1) and the second part (2) are rigidly connected with each other, and wherein the second part (2) is configured to induce forces in the first part (1) upon a drop in temperature to counteract loading stresses. The invention also provides a corresponding method of forming a structural member (M).

## Description

The present invention relates to a structural member for an aircraft or spacecraft, and more particularly to a structural member that is configured to be pre-stressed to enhance its strength or structural properties, such as fatigue strength. The invention also relates to a method of providing such a structural member for use in an aircraft or spacecraft, as well as to an aircraft or a spacecraft that incorporates one or more such structural member.

The principle of pre-stressing structural members to enhance their structural properties has been known in various fields for some time. In the construction industry, for example, it is well-known to pre-stress concrete using tensioned steel reinforcing bars to improve the load-carrying capabilities of concrete beams. Similar principles have also been proposed in European patent application EP 0 941 922 A1 for load-bearing elements of an aircraft. The techniques in that application propose mechanical pre-stressing of the load-bearing elements by providing "pre-pressed" or "pre-stretched" members during manufacture. This, however, leads to a more complicated, more time consuming and necessarily also more costly manufacturing procedure.

It is therefore an object of the present invention to provide a new and improved structural member, especially for use in an aircraft or spacecraft, which is designed to overcome the problems discussed above. It would be particularly desirable to provide a structural member that is designed or configured to be readily and/or automatically pre-stressed in service or in use to provide improved structural characteristics, such as improved fatigue strength or improved fatigue life.

In accordance with the present invention, a structural member and a method of forming such a structural member, as recited in claim 1 and claim 9, respectively, are provided for use particularly in aeronautical applications. Furthermore, in accordance with the invention, a vehicle, such as an aircraft or spacecraft, as recited in claim 15 is also provided. A number of preferred features of the invention are recited in the dependent claims.

According to one aspect, therefore, the invention provides a structural member, especially for an aircraft or spacecraft, comprising:
a first part comprised of a first material having a first coefficient of thermal expansion; and
a second part comprised of a second material having a second coefficient of thermal expansion;
wherein the first part and the second part are securely and substantially rigidly connected with each other, and wherein the second part is configured to induce forces in the first part upon a drop in temperature to counteract loading stresses in use, e.g. in flight or at altitude.

The present invention thus combines different materials in first and second parts or components of the structural member and takes advantage of the differing coefficients of thermal expansion of these two materials to counteract the loading forces or stresses experienced by the structural member in use. In particular, the structural member of the invention is able to take advantage of dramatic temperature differences experienced by the structural member in service or in use to effect automatic pre-stressing of the structural member. In this regard, it will be noted that jet aircraft in commercial aviation typically fly at altitudes in the range of about 8000 to 12,000 metres above sea-level, where the ambient air temperature is typically between -35°C to -55°C, compared to a ground temperature that will usually be in the range of about 0° to 30° C. Accordingly, the structural members of the aircraft, especially in the hull or fuselage structure but also the wing and tail structures, will typically experience a temperature differential in service within the range of about 50° to 80° C. The structural member of the invention utilizes this temperature differential via the different (i.e. first and second) materials to counteract loading forces or stresses experienced by the structural member in use. This, in turn, is able to provide significant advantages for the fatigue life of the structural member and/or for its static loading capacity.

In a preferred embodiment, therefore, the second coefficient of thermal expansion is substantially lower than the first coefficient of thermal expansion. In particular, the second coefficient of thermal expansion is preferably less than one fifth, more preferably less than one tenth, and even more preferably less than one twentieth of the first coefficient of thermal expansion. In this regard, the first material is typically a metal or a metal alloy, such as titanium or aluminium, or an alloy of titanium and/or of aluminium. The second material, on the other hand, is preferably a composite material such as a fibre-reinforced polymer, like glass fibre reinforced polymer (GFRP) or carbon fibre-reinforced polymer (CFRP). It will be appreciated that GFRP and CFRP composite materials typically have a very low coefficient of thermal expansion compared to metals and metal alloys. Accordingly, a temperature drop in the range of about 50°C to 80°C in use or in service will generate a significant difference in thermal contraction between the first and second parts or components of the structural member, which in turn automatically creates internal stresses to produce a pre-stressed structural member when employed in a hull or fuselage structure of an aircraft in flight or at altitude. It will be appreciated, of course, that materials other than those specified above may be used for the first and second parts to utilise this effect. For example, the second material need not be a composite material but could simply be a polymer or plastic. Indeed, different metals may also be combined as the first and second materials in the structural member.

In a preferred embodiment, the first part of the structural member may itself be a structural part or component and may be formed as an elongate component, e.g. with a substantially constant transverse cross-section or profile. In particular, the first part or component may be provided in the form of a structural or load-bearing component, like a panel, beam, strut, rib, or stringer; e.g. with a C-shaped, I-shaped, or Z-shaped cross-section or profile. Indeed, the particular shape or form of the first part or component may substantially correspond with a general shape or form of the structural member as a whole. In this regard, the second part or component may comprise one or more layers of the second material provided over a region of the first part and securely or rigidly connected over an interface therewith. Thus, the second part or component may be laminated with the first part at that interface. In this regard, it will be appreciated that the structural member may include a plurality of second parts or components, each of which is substantially rigidly connected with, fixed or bonded to the first part or component at a discrete or separate region of that first part or component and thus forming a respective interface therewith.

In a preferred embodiment, the interface at which the or each second part or component is rigidly connected with the first part or component covers a portion of said transverse cross-section or profile, e.g. at least a portion of a flange, and preferably extends substantially continuously along a length of the first part or component. By selecting the position of the interface at which the or each second part or component is applied and connected to the first part or component, a region of the first part at which the loading forces are counteracted can be determined. For example, the position of the interface(s) may be selected such that the forces or the pre-stress induced in the first part by each second part upon a drop in temperature counteracts loading in a region of the first part that is subject to tension forces in use. This is particularly advantageous because the tension stresses in structural members used in aircraft and in other aviation applications are critical to the fatigue life of the member. Accordingly, counteracting or reducing these tension forces can have a very positive impact on the fatigue life of the structural member. Similarly, the position of the interface may be selected such that the forces induced in the first part by the second part upon a drop in temperature counteract the loading in a region of the first part that is subject to compression stresses in use. This can also be advantageous because compression forces are often critical to the static (e.g. buckling) stability of the structural member so that counteracting or reducing the compression stress can have a positive impact on the static strength of the member.

According to another aspect, the invention provides a method of forming a structural member, comprising the steps of:
providing a first component of a first material having a first coefficient of thermal expansion; and
providing at least one second component of a second material having a second coefficient of thermal expansion in substantially rigid connection with the first component;
whereby the at least one second component is configured to induce forces in, and thereby to pre-stress, the first component upon a drop in temperature to counteract loading stresses in use, e.g. in flight or at altitude.

In a preferred embodiment, the step of providing the at least one second component in secure or rigid connection with the first component over an interface therewith includes the step of laminating the second component on the first component to be bonded, fused, or fixed at the interface. In other words, the at least one second component preferably includes one or more layers of second material bonded, fused, or fixed to the first component over the said interface. That is, the method may include bonding (e.g. adhesively bonding) the second component in one or more layers of second material over a region of the first component.

As an alternative, or in addition, to adhesive bonding, the step of providing the at least one second component in a secure and/or substantially rigid connection with the first component at the interface therewith may comprise one or more of: fusion or welding, adaptive layer manufacturing, and mechanical fastening (e.g. via rivets, screw fasteners, or the like) between the components. As noted above, the or each second component is preferably configured or arranged in the interface to induce forces that counteract the loading in a region of the first component subject to tension stresses in use. Similarly, the second component(s) may be configured or arranged at the interface to induce forces that counteract loading in a region of the first component that is subject to compression forces in use.

AS already noted, the second coefficient of thermal expansion is preferably less than one fifth, more preferably less than one tenth, and even more preferably less than one twentieth of the first coefficient of thermal expansion. The first material is preferably a metal or a metal alloy, such as an aluminium alloy or a titanium alloy. Preferably, the second material is a composite material, such as a fibre-reinforced polymer (FRP). In this connection, the fibres may be selected from a group consisting of glass, carbon, and aramid fibres. The polymer matrix material may be selected from the group consisting of epoxy, polyester, vinyl ester and nylon resins.

According to still another aspect, the present invention also provides a vehicle, such as an aircraft or spacecraft, which incorporates at least one structural member according to any one of the embodiments of the invention described above.

For a more complete understanding of the invention and the advantages thereof, exemplary embodiments of the invention are explained in more detail in the following description with reference to the accompanying drawings, in which like reference characters designate like parts and in which:
- Fig. 1: is a schematic view of part of a fuselage or body of an aircraft in flight;
- Fig. 2: is a perspective view of structural members in an airframe structure of an aircraft according to an embodiment of the invention;
- Fig. 3: is a C-shaped transverse cross-section or profile of a structural member according to the prior art;
- Fig. 4: is a C-shaped transverse cross-section or profile of a structural member according to an embodiment of the invention;
- Fig. 5: is a schematic illustration of an aircraft in which structural members according to embodiments of the invention are incorporated; and
- Fig. 6: is a flow diagram which schematically illustrates a method according to an embodiment of the,invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

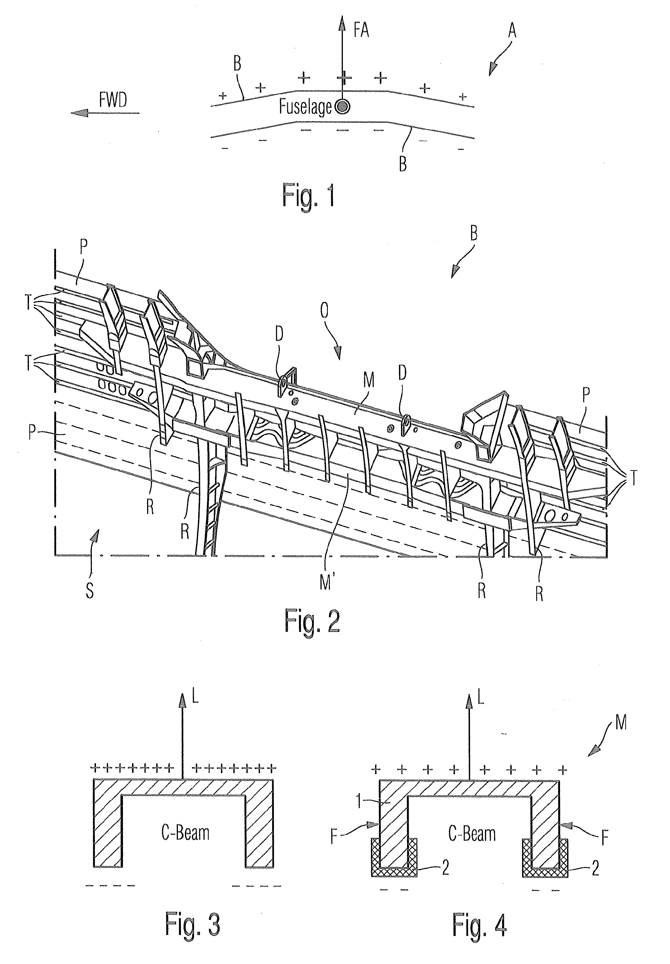

With reference firstly to Fig. 1 of the drawings, a fuselage of an aircraft A in flight is illustrated in an abstract and schematic manner to demonstrate an example of the tension and compression stresses that typically arise in the fuselage in flight. More specifically, during flight, the fuselage body B of the aircraft A is supported by the wings, which generate the "lift" or upward force FA. The mass of the fuselage body B together with any payload it may carry (e.g. passengers, cargo, fuel, etc.) exert bending forces on the fuselage body B under gravity. As a result, tension stresses (indicated by the "+" symbol) occur on the upper side or shells of the fuselage body, whereas compression stresses (indicated by the "-" symbol) are generated on the lower shells of the fuselage structure. In this context, it will be appreciated that these stresses are dynamic and have magnitudes that vary constantly during a flight, giving rise to fatigue issues in structural members over time. Nevertheless, it should be noted that the larger "+" and "-" symbols generally designate areas of the fuselage body where these stresses are typically larger.

Tensile stresses have been demonstrated to be critical for the fatigue life of the structural components in an aircraft, while the compressive stresses are known to be statically critical (e.g. regarding buckling) for the skin and stringers of the fuselage structure. On this background, the present invention is directed to providing an improved structural member, and thus also an improved load-bearing structure, for an aircraft or spacecraft, whereby the fatigue- and/or statically-critical stresses that occur in the new structural member in flight can be counteracted or reduced to optimize the airframe structure.

Referring now to Fig. 2 of the drawings, an example of part of an airframe structure S of an aircraft A at which a wing (not shown) of the aircraft is mounted to the fuselage body B is illustrated in perspective view. The airframe structure S shown in Fig. 2 has a number of outer skin panels P, each with a plurality of longitudinally extending stringers T and forming an external cladding to the fuselage. The airframe structure S further includes circumferentially extending rib members R upon which the skin panels P are mounted.

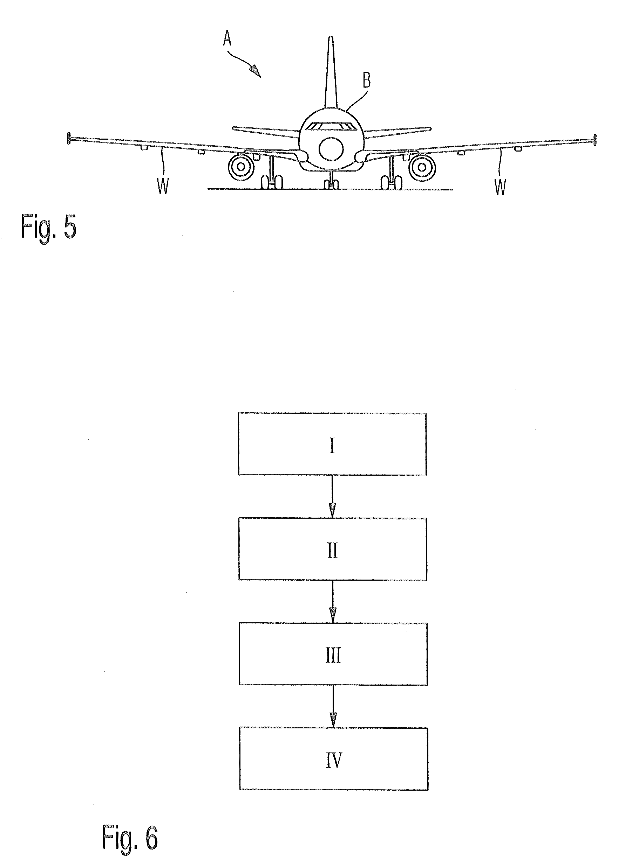

At an opening O in the fuselage body B at which the wing is to be mounted, an elongate structural member M having a C-shaped transverse cross-section or profile is provided in the airframe structure S extending parallel to the longitudinal axis of the fuselage and supported by the circumferential rib members R. This structural member M thus forms a C-beam and is arranged with the channel defined by the C-shaped profile opening downwards. The structural member is further provided with couplings or mounting points D which are used for the Y attachment of the wing. Spaced below and extending parallel to the C-beam M is another structural member M' having a C-shaped transverse cross-section or profile, but arranged or mounted within the airframe structure S in an inverted orientation compared to the structural member M such that the channel formed by the C-profile of this member M' opens upwardly. The structural members M, M' and particularly the C-beam M in this part of the airframe structure S serve to transfer the "lift" forces from the wings and to distribute them over the fuselage body or airframe structure S. Correspondingly, these structural members M, M' act as beams for supporting the fuselage body B in flight suspended from the wings W (see Fig. 5).

With reference to Fig. 3 of the drawings, a transverse cross-section or profile of a conventional C-beam under a load L generated by wing lift and/or fuselage weight during flight is illustrated, with "+" symbols again designating regions of tensile stresses and with "-" symbols designating regions of compressive stresses in the cross-section. The conventional C-beam of Fig. 3 is comprised of an aluminium alloy.

Fig. 4 of the drawings, on the other hand, shows a transverse cross-section or profile of the structural member or C-beam M shown in the airframe structure S of Fig. 2 according to an embodiment of the present invention. In this embodiment, the C-beam M has a first component 1 (in itself not dissimilar to the conventional C-beam of Fig. 3) comprised of an aluminium alloy and having an elongate form with a C-shaped transverse cross-section or profile. Furthermore, the structural member or C-beam M has two second components 2, each comprised of layers of a fibre-reinforced polymer composite material, such as a GFRP or a CFRP, which are laminated with, and securely bonded to, the aluminium alloy of the first component over an interface therewith in each of the flanges F in the C-shaped profile of the structural member M. The respective thickness of the layers of the fibre-reinforced polymer composites in each of the second components 2 may be selected as desired according to the particular circumstances regarding loading of the structural member M in flight or in service.

When the aircraft A is in flight and at a cruising altitude in vicinity of 9000 to 10000 meters, the air temperature outside the aircraft is typically about -40° to -50°C and the aluminium alloy of the first component 1 of the C-beam having a first coefficient of thermal expansion α1 will naturally be inclined to contract or shrink with the substantially lower temperature at cruising altitude compared to the temperature at ground level during take-off. Because the fibre-reinforced polymer composite material of the second components 2 in the flanges F of the structural member M has a coefficient of thermal expansion α2 that is substantially less than the first coefficient of thermal expansion α1 of the aluminium alloy (e.g. α2 is in the range of one tenth to one twentieth of α1), these second components 2 are not subject to the same level of thermal contraction or shrinkage for the temperature drop. Further, because these second components 2 are rigidly bonded to the first component 1, the differential inclination to contract upon a drop in temperature to -50°C during flight at the cruising altitude, the second FRP components 2 induce tensional forces in the flanges F of the C-beam M which counteract the compressive loading stresses in these regions, leading to lower compressive stresses, as is denoted by the smaller number of "-" symbols compared to Fig. 3. This, in turn, counteracts or reduces the tension stresses experienced in the upper region of the C-beam M under the in-flight loading L, as denoted by the smaller number of "+" symbols compared to Fig. 3. As a result, the degree or extent of the tensile and compressive loading stresses on the C-beam M in service or in use can be reduced through the automatically induced pre-stressing of the structural member M in flight via the change in temperature.

Fig. 5 of the drawings shows an aircraft A according to an embodiment of the invention, in which the fuselage body B has an airframe structure S incorporating a number of structural members M, M' according to embodiments of the invention, such as the C-beam M as shown and described with reference to the drawings Fig. 2 and Fig. 4.

Referring now to Fig. 6 of the drawings, a flow diagram is shown that schematically illustrates the steps in a method of forming a structural member M according to the embodiment of the invention described above with respect to Figs. 2 and 4. In this regard, the first box I of Fig. 6 represents the step of providing an elongate first component 1 comprised of metal such as aluminium alloy, with a relatively high coefficient of thermal expansion α1 and having a C-shaped, I-shaped or Z-shaped transverse cross-section or profile. The second box II represents the step of providing a fibre-reinforced composite material, such as GFRP or CFRP, which has a relatively low coefficient of thermal expansion α2. Accordingly, the third box III represents the step of applying the fibre-reinforced composite material to one or more regions of the metal first component 1, such as to one or more flanges F of its C-shaped or I-shaped or Z-shaped profile, in a secure or substantially rigidly bonded connection over an interface therewith to form one or more second component 2 of the structural member. In this regard, it will be appreciated that two or more of such second components 2 may be securely connected with the first component 1. The fourth box IV in drawing Fig. 6 represents that each second component 2 is configured and arranged in such a manner as to induce forces in the first component 1 upon a drop in temperature in flight at the cruising altitude that they counteract loading stresses experienced in service.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- A: aircraft
- B: fuselage body
- S: airframe structure
- P: skin panel
- T: stringer
- R: rib
- O: opening in fuselage body
- M: structural member
- M': structural member
- D: coupling or mounting point
- F: flange
- L: loading force
- W: wing
- 1: first part or component
- 2: second part or component

## Claims

1. A structural member (M) for an aircraft or spacecraft, comprising:
a first part (1) comprising a first material having a first coefficient of thermal expansion (α1); and
a second part (2) comprising a second material having a second coefficient of thermal expansion (α2);
wherein the first part (1) and the second part (2) are rigidly connected with each other, and wherein the second part (2) is configured to induce forces in the first part (1) upon a drop in temperature to counteract loading stresses.

2. A structural member according to claim 1, wherein the forces induced in the first part(1) by the second part (2) counteract loading in a region of the first part (1) that is subject to tension stresses in use.

3. A structural member according to claim 1, wherein the forces induced in the first part (1) by the second part (2) counteract loading in a region of the first part (1) that is subject to compression stresses in use.

4. A structural member according to any of claims 1 to 3, wherein the second coefficient of thermal expansion (α2) is less than one fifth, preferably less than one tenth, and more preferably less than one twentieth of the first coefficient of thermal expansion (α1).

5. A structural member according to any of claims 1 to 4, wherein the first material is a metal or a metal alloy, such as aluminium or an aluminium alloy.

6. A structural member according to any of claims 1 to 5, wherein the second material is a composite material, and preferably a fibre-reinforced polymer, such as a carbon fibre-reinforced polymer.

7. A structural member according to any of claims 1 to 6, wherein the second part (2) is laminated with the first part (1) at an interface, wherein the second part (2) preferably forms one or more layer on the first part (1) over the interface.

8. A structural member according to any of claims 1 to 7, wherein the first part (1) is an elongate component with a substantially constant transverse cross-section or profile, and wherein the structural member is in the form or a beam, strut, rib, stringer or panel.

9. A method of forming a structural member (M), comprising the steps of:
providing a first component (1) comprised of a first material having a first coefficient of thermal expansion (α1); and
providing a second component (2) comprised of a second material having a second coefficient of thermal expansion (α2) and being applied in substantially rigid connection to the first component (1);
whereby the second component (2) is configured to induce forces in the first component (1) upon a drop in temperature to counteract loading stresses.

10. A method according to claim 9, wherein the step of providing the second component (2) applied to the first component (1) includes laminating and bonding the second component (2) at an interface with the first component (1), wherein the second component (2) preferably forms one or more layer on the first component (1) over the interface.

11. A method according to claim 9 or claim 10, wherein the second component (2) is configured or arranged to induce forces that counteract loading in a region of the first component (1) subject to tension stresses in use.

12. A method according to claim 9 or claim 10, wherein the second component (2) is configured or arranged to induce forces that counteract loading in a region of the first component (1) subject to compression stresses in use.

13. A method according to any of claims 9 to 12, wherein the second coefficient of thermal expansion (α2) is less than one fifth, preferably less than one tenth, and more preferably less than one twentieth of the first coefficient of thermal expansion (α1).

14. A method according to any of claims 9 to 12, wherein the first material is a metal or a metal alloy, preferably aluminium or an aluminium alloy; and/or wherein the second material is a composite material, preferably a fibre reinforced polymer.

15. A vehicle, such as an aircraft (A), having one or more structural member (M) according to any of claims 1 to 8.
